# NEUE EUROPÄISCHE PATENTSCHRIFT

(11) **EP 1 340 608 B2**
(45) Veröffentlichungstag und Bekanntmachung des Hinweises auf die Entscheidung über den Einspruch: **20.04.2011**
(45) Hinweis auf die Patenterteilung: 30.06.2004
(21) Anmeldenummer: 02003867.5
(22) Anmeldetag: 21.02.2002
(51) Int. Cl.: B29C 59/04, D21G 1/00

(54) **Glättvorrichtung**
Smoothing device
Appareil de lissage

(43) Veröffentlichungstag der Anmeldung: 03.09.2003
(73) Patentinhaber: Reifenhäuser GmbH & Co. Maschinenfabrik, 53839 Troisdorf (DE)
(72) Erfinder: Meyer, Helmut, 53842 Troisdorf (DE); Lieven, Joachim, 50321 Brühl (DE)
(74) Vertreter: Rohmann, Michael

(56) Entgegenhaltungen:
- EP-A- 0 899 081
- WO-A-01/86781
- WO-A-01/86781
- DE-A- 2 900 734
- DE-A- 2 900 734
- DE-A- 3 544 751
- DE-A- 3 730 043
- DE-A- 4 138 479
- DE-A- 4 322 744
- DE-A- 4 430 176
- DE-A- 19 721 170
- DE-U- 1 975 025
- DE-U- 29 910 332
- DE-U- 29 910 332
- US-A- 5 318 340
- US-A- 5 499 912
- BAUMÜLLER NÜRNBERG: 'Direktantriebstechnik Integration von Mechanik und Electronik' DIREKTANTRIEBSTECHNIK September 1994, NÜRNBERG,

## Beschreibung

Die Erfindung betrifft eine Kunststofffolienglättvorrichtung mit einer Glättwalze und einem Glättwalzenantrieb. - Solche Glättvorrichtungen bzw. Glättwalzen kommen insbesondere bei der Herstellung von Kunststofffolien bzw. Kunststoffbahnen zum Einsatz, beispielsweise im Rahmen von Tiefziehfolienanlagen. Üblicherweise sind dabei mehrere Glättwalzen, beispielsweise drei Glättwalzen hintereinander angeordnet.

Bei der aus der Praxis bekannten Glättvorrichtung der eingangs genannten Art (siehe DE 2 900 734 A), von der die Erfindung ausgeht, ist die Glättwalze bzw. eine Antriebswelle der Glättwalze über ein Getriebe an einen Elektromotor angeschlossen. Die mit dieser bekannten Glättvorrichtung bzw. mit der bekannten Glättwalze behandelten Folien weisen nach ihrer Behandlung an ihrer Oberfläche in der Regel unerwünschte Störstellen in Form von Markierungen auf, die auch als Rattermarken bezeichnet werden. Dieses Problem tritt insbesondere bei dickeren Folien und Platten auf.

Demgegenüber liegt der Erfindung das technische Problem zugrunde, eine Glättvorrichtung der eingangs genannten Art anzugeben, mit der Folien herstellbar sind, die sich durch eine hervorragende Oberflächenqualität auszeichnen und unerwünschte Störstellen bzw. Markierungen nicht aufweisen. Mit anderen Worten sollen mit der erfindungsgemäßen Glättvorrichtung rattermarkenfreie Produkte hergestellt werden.

Zur Lösung des vorgenannten technischen Problems lehrt die Erfindung eine Kunststofffolienglättvorrichtung nach Patentanspruch 1.

Dass der Stator und der Rotor koaxial zueinander angeordnet sind, meint im Rahmen der Erfindung auch, dass Stator und Rotor im Wesentlichen koaxial zueinander angeordnet sind. Stator und Rotor haben zueinander parallele Zylindermantelflächen und dabei umgibt der zylinderförmige Stator den zylinderförmigen Rotor. Mit anderen Worten ist also der Rotor gleichsam zentriert in den von dem Stator ringförmig umgebenen Zwischenraum eingesetzt. Für den Stator kann eine Wasserkühlung vorgesehen sein. Dazu kann der Stator entsprechende Wasserkühlungskanäle aufweisen. - Es liegt im Rahmen der Erfindung, dass der als Elektromotor ausgeführte Antriebsmotor ein hohes Drehmoment bzw. hohes Antriebsmoment bei verhältnismäßig geringer Motordrehzahl aufweist. Die Rotordrehzahl des Antriebsmotors entspricht im Übrigen der Walzendrehzahl der Glättwalze.

Erfindungsgemäß umgibt der Rotor zumindest einen Teil einer Anschlusshülse. Dabei ist der Rotor drehfest an dieser Anschlusshülse angeschlossen. Es ist vorgesehen, dass die Antriebswelle der Glättwalze mit der Anschlusshülse drehfest verbunden ist. Dabei umgibt der Rotor einen zylinderförmigen Teil der Anschlusshülse, der als Hohlzylinder ausgebildet ist. Der Rotor ist dann mit diesem zylinderförmigen Teil bzw. Hohlzylinder der Anschlusshülse drehfest verbunden. Es liegt im Übrigen im Rahmen der Erfindung, dass die Antriebswelle unmittelbar mit der Anschlusshülse verbunden ist. Die Anschlusshülse bildet dabei also gleichsam eine Verlängerung der Antriebswelle. Nach sehr bevorzugter Ausführungsform der Erfindung greift die Antriebswelle der Glättwalze in eine glättwalzenseitige Ausnehmung der Anschlusshülse ein. Zweckmäßigerweise greift dabei ein entsprechendes Anschlussende der Antriebswelle in die glättwalzenseitige Ausnehmung der Anschlusshülse ein, welche Ausnehmung zylinderförmig ausgebildet ist.

Nach einer Ausführungsform der Erfindung stützt sich das Aggregat aus Anschlusshülse und Rotor an einem das Aggregat umgebenden äußeren drehfesten Gehäuseteil über Wälzlager ab. Das äußere drehfeste Gehäuseteil besteht dabei aus dem Antriebsgehäuse und dem Stator. Dieses Gehäuseteil ist zweckmäßigerweise zylinderförmig ausgebildet. Bei dieser Ausführungsform stützt sich vorzugsweise die Anschlusshülse an dem Antriebsgehäuse ab.

Nach einer Ausführungsform der Erfindung ist an der Rückseite des Antriebsgehäuses eine Rückwand vorgesehen, die mit dem äußeren drehfesten Gehäuseteil verbunden ist und die einen Encoder zur Drehzahlmessung aufnimmt. Die Rückwand ist dabei zweckmäßigerweise drehfest mit dem äußeren drehfesten Gehäuseteil verbunden. Der Encoder ist vorzugsweise zentralmittig in der Rückwand aufgenommen und bevorzugt fest mit der Rückwand verschraubt.

Nach einer anderen Ausführungsform der Erfindung stützt sich das Aggregat aus Anschlusshülse und Rotor an einem von zumindest einem Teil der Anschlusshülse umgebenen inneren drehfesten Gehäuseteil über Wälzlager ab. Zweckmäßigerweise handelt es sich dabei um ein zylinderförmiges inneres Gehäuseteil, das in dem zylinderförmigen Aufnahmeraum bzw. in dem Hohlzylinder der Anschlusshülse angeordnet ist. Bei dieser Ausführungsform wird vorzugsweise ein Encoder zur Drehzahlmessung glättwalzenseitig von dem inneren drehfesten Gehäuseteil aufgenommen. Zweckmäßigerweise ist der Enconder dabei zentralmittig in einer Zylinderstirnfläche des zylinderförmigen inneren drehfesten Gehäuseteils angeordnet.

Es liegt im Rahmen der Erfindung, dass sich die Antriebswelle der Glättwalze über Lagerelemente an einer Stützvorrichtung abstützt. Auf diese Weise wird eine besonders funktionssichere Abstützung bzw. Stabilisierung der Antriebswelle der Glättwalze erreicht.

Der Erfindung liegt die Erkenntnis zugrunde, dass mit einer erfindungsgemäß ausgestalteten Glättvorrichtung Folien mit optimaler Oberflächenqualität hergestellt werden können. Nach dem Behandeln bzw. Glätten der Folien sind an der Oberfläche der behandelten Produkte überraschenderweise keine störenden Rattermarken erkennbar. Insoweit zeichnet sich die erfindungsgemäße Glättvorrichtung gegenüber den eingangs beschriebenen aus dem Stand der Technik bekannten Glättvorrichtungen durch beachtliche Vorteile aus. Die erfindungsgemäße Glättvorrichtung weist aber noch weitere vorteilhafte Eigenschaften auf. Dadurch, dass erfindungsgemäß auf die Zwischenschaltung eines mechanischen Getriebes zwischen Elektromotor und Glättwalze verzichtet werden kann, fallen in vorteilhafter Weise auch eine Reihe von mechanisch beanspruchten Verschleißteilen weg und durch Verzicht auf Getriebeöl wird eine störende Gefahrenquelle ausgeschlossen. Durch den Wegfall des Getriebes werden auch die für die Glättvorrichtung erforderlichen Wartungsarbeiten beachtlich reduziert. Die erfindungsgemäße Glättvorrichtung zeichnet sich vor allem auch durch einen schwingungsfreien geräuscharmen Lauf sowie durch einen spielfreien Lauf aus. Von besonderer Bedeutung ist, dass die erfindungsgemäße Glättvorrichtung gegenüber den aus dem Stand der Technik bekannten Glättvorrichtungen mit zwischengeschaltetem Getriebe wesentlich weniger voluminös aufgebaut ist. Bei der erfindungsgemäßen Vorrichtung handelt es sich also um eine sehr kompakte und raumsparende Vorrichtung.

Nachfolgend wird die Erfindung anhand einer lediglich ein Ausführungsbeispiel darstellenden Zeichnung näher erläutern. Es zeigen in schematischer Darstellung:
- Fig. 1: eine erste Ausführungsform einer erfindungsgemäßen Glättvorrichtung und
- Fig. 2: den Gegenstand nach Fig. 1 in einer anderen Ausführungsform.

Die Figuren zeigen eine Glättvorrichtung zum Glätten von nicht dargestellten Folien mit einer Glättwalze 1 und einem Glättwalzenantrieb 2. Der Glättwalzenantrieb 2 besteht aus einem Antriebsgehäuse 3 und einem Antriebsmotor mit Stator 4 und Rotor 5. In dem Antriebsgehäuse 3 sind der zylinderförmige Stator 4 und der zylinderförmige Rotor 5 koaxial zueinander angeordnet. In den Figuren ist erkennbar, dass der zylinderförmige Stator 4 den zylinderförmigen Rotor 5 umgibt. Erfindungsgemäß ist der zylinderförmige Rotor 5 des als Elektromotor ausgebildeten Antriebsmotors ohne Zwischenschaltung eines Getriebes an einer Antriebswelle 6 der Glättwalze 1 angeschlossen.

Dabei umgibt der zylinderförmige Rotor 5 einen zylinderförmigen Teil bzw. einen rückseitigen Hohlzylinder. 8 einer Anschlusshülse 9. Der Rotor 5 ist an diese Anschlusshülse 9 drehfest angeschlossen. Die Antriebswelle 6 der Glättwalze 1 ist wiederum unmittelbar mit der Anschlusshülse 9 drehfest verbunden. Die Antriebswelle 6 greift dabei vorzugsweise und im Ausführungsbeispiel mit einem Anschlussende 10 in eine glättwalzenseitige Ausnehmung 11 der Anschlusshülse 9 ein. Die glättwalzenseitige Ausnehmung 11 ist dabei als glättwalzenseitiger Hohlzylinder der Anschlusshülse 9 ausgebildet.

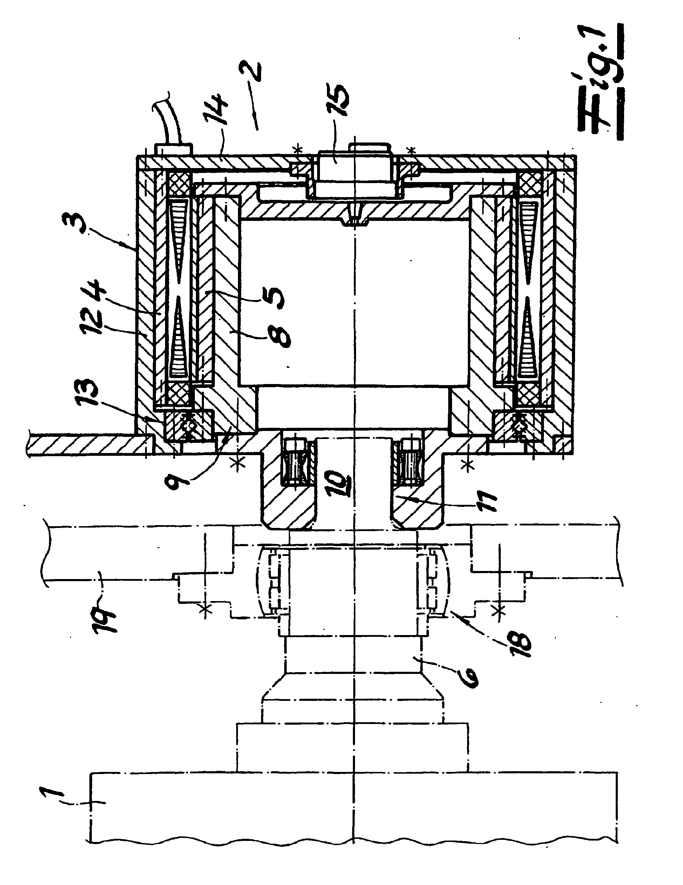

Bei der Ausführungsform nach Fig. 1 stützt sich beim Drehen des Rotors 5 das Aggregat aus Anschlusshülse 9 und Rotor 5 an einem das Aggregat umgebenden äußeren drehfesten Gehäuseteil 12 über Wälzlager 13 ab. Das äußere Gehäuseteil 12 besteht aus dem zylinderförmigen Antriebsgehäuse 3 und dem Stator 4. Es ist erkennbar, dass vorzugsweise und im Ausführungsbeispiel sich die Anschlusshülse 9 an dem Antriebsgehäuse 3 über die Wälzlager 13 abstützt. Zweckmäßigerweise und im Ausführungsbeispiel nach Fig. 1 ist an der Rückseite des Antriebsgehäuses 3 eine Rückwand 14 vorgesehen, die mit dem äußeren drehfesten Gehäuseteil 12 verbunden ist und die einen Encoder 15 zur Drehzahlmessung aufnimmt. In Fig. 1 ist erkennbar, dass die Rückwand 14 sowohl mit dem Antriebsgehäuse 3 als auch mit dem Stator 4 drehfest verbunden ist. Der Encoder 15 ist zweckmäßigerweise und im Ausführungsbeispiel nach Fig. 1 zentralmittig in der Rückwand 14 angeordnet und vorzugsweise fest mit der Rückwand 14 verschraubt.

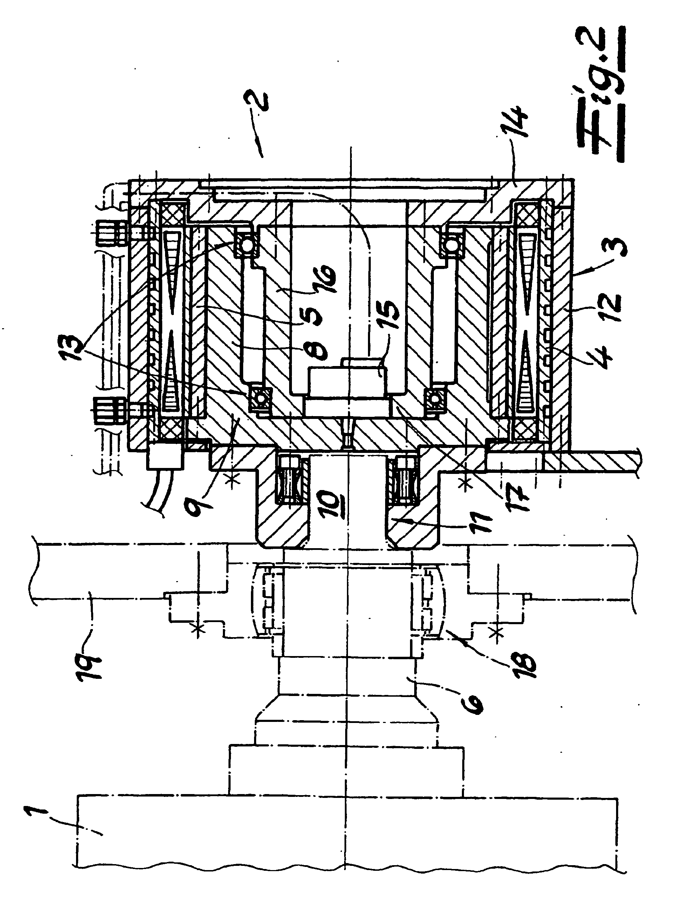

Bei der Ausführungsform nach Fig. 2 stützt sich bei einer Drehung des Rotors 5 das Aggregat aus Anschlusshülse 9 und Rotor 5 an einem inneren drehfesten Gehäuseteil 16 über Wälzlager 13 ab. Das innere drehfeste Gehäuseteil 16 ist zylinderförmig ausgebildet und wird im Ausführungsbeispiel von dem rückseitigen Hohlzylinder 8 der Anschlusshülse 9 umgeben. Auch im Ausführungsbeispiel nach Fig. 2 ist an der Rückseite des Antriebsgehäuses 3 eine Rückwand 14 vorgesehen, die im Ausführungsbeispiel nach Fig. 2 an dem inneren drehfesten Gehäuseteil 16 befestigt ist. Im Übrigen ist die Rückwand 14 an dem Antriebsgehäuse 3 befestigt und im Ausführungsbeispiel nach Fig. 2 auch mit dem Stator 4 verbunden. Bei der Ausführungsform nach Fig. 2 ist glättwalzenseitig ein Encoder 15 zur Drehzahlmessung an dem inneren drehfesten Gehäuseteil 16 vorgesehen. Der Encoder 15 wird dabei vorzugsweise und im Ausführungsbeispiel zentralmittig in der Zylinderstirnfläche 17 des inneren Gehäuseteils 16 vorgesehen.

In den Figuren 1 und 2 ist erkennbar, dass die Antriebswelle 6 der Glättwalze 1 sich über Lagerelemente 18 an einer Stützvorrichtung 19 abstützt. Hierdurch wird eine besonders effektive Abstützung bzw. Stabilisierung der Glättwalze 1 erreicht.

## Patentansprüche

1. Kunststofffolienglättvorrichtung mit einer Glättwalze (1) und einem Glättwalzenantrieb (2),
wobei der Glättwalzenantrieb (2) aus einem Antriebsgehäuse (3) und einem Antriebsmotor mit Stator (4) und Rotor (5) besteht,
wobei in dem Antriebsgehäuse (3) der zylinderförmige Stator (4) und der zylinderförmige Rotor (5) koaxial zueinander angeordnet sind,
wobei der zylinderförmige Stator (4) den zylinderförmigen Rotor (5) umgibt, wobei der zylinderförmige Rotor (5) ohne Zwischenschaltung eines Getriebes an eine Antriebswelle (6) der Glättwalze (1) angeschlossen ist,
wobei der zylinderförmige Rotor (5) einen als Hohlzylinder (8) ausgebildeten Teil einer Anschlusshülse (9) umgibt, wobei der Rotor (5) an diese Anschlusshülse (9) drehfest angeschlossen ist und wobei die Antriebswelle (6) der Glättwalze (1) mit der Anschlusshülse (9) drehfest verbunden ist.

2. Glättvorrichtung nach Anspruch 1, wobei die Antriebswelle (6) der Glättwalze (1) in eine glättwalzenseitige Ausnehmung (11) der Anschlusshülse (9) eingreift.

3. Glättvorrichtung nach einem der Ansprüche 1 oder 2, wobei sich das Aggregat aus Anschlusshülse (9) und Rotor (5) an einem das Aggregat umgebenden äußeren drehfesten Gehäuseteil (12) über Wälzlager (13) abstützt.

4. Glättvorrichtung nach einem der Ansprüche 1 bis 3, wobei an der Rückseite des Antriebsgehäuses (3) eine Rückwand (14) vorgesehen ist, die mit dem äußeren drehfesten Gehäuseteil (12) verbunden ist und die einen Encoder (15) zur Drehzahlmessung aufnimmt.

5. Glättvorrichtung nach einem der Ansprüche 1 oder 2, wobei sich das Aggregat aus Anschlusshülse (9) und Rotor (5) an einem von zumindest einem Teil der Anschlusshülse (9) umgebenen inneren drehfesten Gehäuseteil (16) über Wälzlager (13) abstützt.

6. Glättvorrichtung nach Anspruch 5, wobei glättwalzenseitig ein Encoder (15) zur Drehzahlmessung von dem inneren drehfesten Gehäuseteil (16) aufgenommen ist.

7. Glättvorrichtung nach einem der Ansprüche 1 bis 6, wobei die Antriebswelle (6) der Glättwalze (1) sich über Lagerelemente (18) an einer Stützvorrichtung (19) abstützt.

## Claims

1. A plastic foil smoothing device including a flat roller (1) and a flat roller drive unit (2),
wherein the flat roller drive unit (2) consists of a drive unit housing (3) and a drive motor with stator (4) and rotor (5),
wherein the cylindrical stator (4) and the cylindrical rotor (5) are arranged coaxially with one another inside the drive unit housing (3),
wherein the cylindrical stator (4) surrounds the cylindrical rotor (5),
wherein the cylindrical rotor (5) is connected to a drive shaft (6) of the flat roller (1) without the interposition of a gearing,
wherein the cylindrical rotor (5) surrounds a part of a connecting sleeve (9) that is constructed in the form of a hollow cylinder (8), wherein the rotor (5) is connected in non-rotating manner to this connecting sleeve, (9), and wherein the drive shaft (6) of the flat roller (1) is connected in non-rotating manner to the connecting sleeve (9).

2. The smoothing device as recited in claim 1, wherein the drive shaft (6) of the flat roller (1) engages in a recess (11) in the connection sleeve (9) on the side facing the flat roller.

3. The smoothing device as recited in either of claims 1 or 2, wherein the assembly of connecting sleeve (9) and rotor (5) is braced via roller bearings (13) against an outer, non-rotatable housing part (12) that surrounds the assembly.

4. The smoothing device as recited in any of claims 1 to 3, wherein a rear wall (14) is provided on the rear side of the drive unit housing (3) and is connected to the outer, non-rotatable housing part (12) and houses an encoder (15) for measuring rotating speed.

5. The smoothing device as recited in either of claims 1 or 2, wherein the assembly of connecting sleeve (9) and rotor (5) is braced via roller bearings (13) against an inner, non-rotatable housing part (16) that is surrounded by at least a part of the connecting sleeve (9).

6. The smoothing device as recited in claim 5, wherein an encoder (15) for measuring rotating speed is housed on the flat roller side by the inner, non-rotatable housing part (16).

7. The smoothing device as recited in any of claims 1 to 6, wherein the drive shaft (6) of the flat roller (1) is braced against a bearing device (19) via bearing elements (18).

## Revendications

1. Dispositif de lissage de films de matière plastique avec un cylindre de lissage (1) et un entraînement de cylindre de lissage (2),
l'entraînement du cylindre de lissage (2) étant constitué d'un carter d'entraînement (3) et d'un moteur d'entraînement avec un stator (4) et un rotor (5),
le stator de forme cylindrique (4) et le rotor de forme cylindrique (5) étant disposés de façon coaxiale l'un par rapport à l'autre dans le carter d'entraînement (3)
le stator de forme cylindrique (4) entourant le rotor de forme cylindrique (5)
le rotor de forme cylindrique (5) étant raccordé sur un arbre d'entraînement (6) du cylindre de lissage (1), sans raccordement intermédiaire d'une transmission
le rotor de forme cylindrique (5) entourant une partie formée en tant que cylindre creux (8) d'une douille de raccordement (9), le rotor (5) étant raccordé de façon solidaire en rotation sur ladite douille de raccordement (9) et l'arbre d'entraînement (6) du cylindre de lissage (1) étant relié de façon solidaire en rotation avec la douille de raccordement (9).

2. Dispositif de lissage selon la revendication 1, l'arbre d'entraînement (6) du cylindre de lissage (1) s'engrenant dans un évidement (11) situé côté rouleau de lissage de la douille de raccordement (9).

3. Dispositif de lissage selon l'une quelconque des revendications 1 ou 2, l'agrégat constitué de la douille de raccordement (9) et du rotor (5) s'appuyant par l'intermédiaire de paliers à roulement (13) sur une partie externe du carter (12) solidaire en rotation et entourant l'agrégat.

4. Dispositif de lissage selon l'une quelconque des revendications 1 à 3, une paroi arrière (14) reliée avec la partie externe du carter (12) solidaire en rotation et réceptionnant un encodeur (15) destiné à mesurer la vitesse de rotation étant prévue sur la face arrière du carter d'entraînement (3).

5. Dispositif de lissage selon l'une quelconque des revendications 1 ou 2, l'agrégat constitué de la douille de raccordement (9) et du rotor (5) s'appuyant par l'intermédiaire de paliers à roulement (13) sur une partie interne du carter (16) solidaire en rotation et entourée par au moins une partie de la douille de raccordement (9).

6. Dispositif de lissage selon la revendication 5, un encodeur (15) destiné à mesurer la vitesse de rotation étant logé côté cylindre de lissage sur la partie interne du carter (16) solidaire en rotation.

7. Dispositif de lissage selon l'une quelconque des revendications 1 à 6, l'arbre d'entraînement (6) du cylindre de lissage (1) s'appuyant sur un dispositif de support (19) par l'intermédiaire d'éléments de palier (18).
